# EUROPÄISCHE PATENTANMELDUNG

(11) **EP 4 230 441 A1**
(43) Veröffentlichungstag der Anmeldung: **23.08.2023**
(21) Anmeldenummer: 23401006.4
(22) Anmeldetag: 06.02.2023
(51) Int. Cl.: B60C 23/00, A01C 5/06, A01B 5/04

(54) **VERFAHREN ZUM STEUERN DES REIFENDRUCKS EINER LANDWIRTSCHAFTLICHEN ANBAUMASCHINE**

(30) Priorität: 16.02.2022 DE 102022103561
(71) Anmelder: Amazonen-Werke H. Dreyer SE & Co. KG, 49205 Hasbergen (DE)
(72) Erfinder: Stier, Roy, 26121 Oldenburg (DE)

(57) **Zusammenfassung**

Die Erfindung betrifft ein Verfahren zum Steuern des Reifendrucks (P) zumindest eines Reifens (36) einer eine Mehrzahl von Reifen aufweisenden Reifenanordnung (24) einer landwirtschaftlichen Anbaumaschine (16), insbesondere einer Sämaschine, wobei Positionsdaten, mittels welchen die Position der Anbaumaschine (16) bestimmbar ist, durch eine Positionserfassungseinheit (30) erfasst werden und der Reifendruck (P) zumindest eines Reifens (36) der Reifenanordnung (24) mittels einer Reifendrucksteuereinheit (32) in Abhängigkeit der erfassten Positionsdaten und zumindest einer auf einem Datenspeicher (34) hinterlegten Feldgrenze (56, 58) angepasst wird.

## Beschreibung

Die Erfindung betrifft ein Verfahren zum Steuern des Reifendrucks zumindest eines Reifens einer eine Mehrzahl von Reifen aufweisenden Reifenanordnung einer landwirtschaftlichen Anbaumaschine und ein Steuersystem zum Steuern des Reifendrucks zumindest eines Reifens einer eine Mehrzahl von Reifen aufweisenden Reifenanordnung.

Landwirtschaftliche Anbaumaschinen, insbesondere Sämaschinen, sind häufig mit Packerreifen ausgestattet, welche für eine Rückverfestigung des Bodens bei der Feldbearbeitung eingesetzt werden. Für eine gleichmäßige und reproduzierbare Rückverfestigung des Bodens ist es notwendig, dass ein den Anforderungen der Feldbearbeitung entsprechender Reifendruck an den Packerreifen zur optimalen Bodenverfestigung eingestellt wird. Da sich die Anforderungen an die Reifen der Anbaumaschine während der Feldbearbeitung, beispielsweise durch sich ändernde Umgebungsbedingungen, verändern können und sich erheblich von den Anforderungen während des Straßentransports unterscheiden, ist es vorteilhaft, wenn der Reifendruck bei sich ändernden Bedingungen während der Feldbearbeitung und beim Wechsel zwischen Straßenfahrten und Feldfahrten automatisch angepasst wird, sodass der Reifendruck den anwendungsspezifischen Erfordernissen zu jeder Zeit genügt.

Um zum Anpassen des Reifendrucks zwischen Feldfahrten und Straßenfahrten zu unterscheiden, werden im Stand der Technik kartografische Daten herangezogen, sodass zwischen Straßenfahrten und Feldfahrten unterschieden werden kann. Aus der Druckschrift DE 20 2011 051 292 U1 ist beispielsweise eine Reifendruckregelanlage bekannt, welche kartografische Daten nutzt, um den Reifendruck abhängig von der geographischen Position des Fahrzeugs einzustellen.

Aus der Druckschrift EP 3 763 551 A1 ist ferner bekannt, dass die Ansteuerung einer Reifendruckregelanlage eines landwirtschaftlichen Fahrzeuggespanns in Abhängigkeit von aus dem aktuellen Betriebsstatus der Maschine resultierenden Sensordaten oder infolge manueller Bedienbefehle angesteuert werden kann. Es wird in diesem Zusammenhang bereits berücksichtigt, dass der Einsatz von kartografischen Daten einen vergleichsweise hohen Aufwand bedeutet.

Insofern ist es bereits bekannt, Positionsdaten eines Fahrzeuggespanns zu erfassen und diese Positionsdaten zur Anpassung des Reifendrucks an der landwirtschaftlichen Anbaumaschine zu verwenden. Bisher werden jedoch kartografische Daten dazu verwendet, den Reifendruck in Abhängigkeit der Fahrzeugposition anzupassen. Der Einsatz von kartografischen Daten ist jedoch mit Nachteilen verbunden. Karten enthalten üblicherweise keine ausführlichen Informationen über landwirtschaftliche Nutzflächen. Diese müssen also zunächst erfasst und aufwendig in die kartografischen Daten eingepflegt werden, sodass die notwendigen Informationen zu landwirtschaftlichen Nutzflächen für die Bestimmung der Fahrzeugposition genutzt werden können.

Außerdem erfordern kartografische Daten einen großen Speicherplatz und eine entsprechende Rechenleistung zur Datenverarbeitung. Im Stand der Technik wurde dieses Problem bereits erkannt. Alternativ werden dann Sensordaten herangezogen, um zu entscheiden, ob sich das Fahrzeug auf einem Feld oder auf einer Straße befindet, um den Reifendruck unabhängig von kartografischen Daten anpassen zu können. Allerdings bringt der Einsatz von Sensordaten wiederum neue Nachteile mit sich. Um mit der notwendigen Genauigkeit zu erfassen, ob sich ein landwirtschaftliches Fahrzeug auf einer Straße oder auf einem Feld befindet, sind möglichst genaue und präzise Sensordaten erforderlich. Das Fahrzeug muss also mit einer kostspieligen und aufwendigen Sensorik ausgestattet werden. Hinzu kommt, dass auch eine sehr aufwendige Sensorik nicht dazu in der Lage ist, mit der gleichen Präzision zu entscheiden, ob sich das Fahrzeug auf einem Feld befindet oder nicht. Die Sensordaten können nur Hinweise zur Fahrzeugposition liefern und sind damit vergleichsweise ungenau. Zudem erfassen Sensordaten nur die augenblickliche Situation, sodass der Reifendruck nicht vorausschauend angepasst werden kann, wodurch die Anpassung vergleichsweise träge und verzögert ist.

Die der Erfindung zugrunde liegende Aufgabe besteht somit darin, den Reifendruck an einer landwirtschaftlichen Anbaumaschine mit höchstmöglicher Ortsgenauigkeit anzupassen und dabei den Aufwand zur Bestimmung, ob sich die Anbaumaschine auf einem Feld oder einer Straße befindet, möglichst gering zu halten.

Die Aufgabe wird gelöst durch ein Verfahren der eingangs genannten Art, wobei Positionsdaten, mittels welchen die Position der Anbaumaschine bestimmbar ist, durch eine Positionserfassungseinheit erfasst werden und der Reifendruck zumindest eines Reifens der Reifenanordnung mittels einer Reifendrucksteuereinheit in Abhängigkeit der erfassten Positionsdaten und zumindest einer auf einem Datenspeicher hinterlegten Feldgrenze angepasst wird.

Hinterlegte Feldgrenzen haben gegenüber kartografischen Daten den Vorteil, dass innerhalb einer Feldfläche verlaufende feldinterne Feldgrenzen, beispielweise zwischen zwei unterschiedlichen Anbauflächen mit unterschiedlichen Nutzpflanzen, beispielsweise Mais und Weizen, oder Nutzpflanzen unterschiedlicher Wachstumsphasen, oder bei direkt angrenzender Fremdfeldfläche, berücksichtigt werden. Auf kartographischem Material sind üblicherweise keine landwirtschaftlichen Nutzflächen und somit auch keine Feldgrenzen hinterlegt, sodass diese zunächst eingepflegt werden müssen. Die zumindest eine hinterlegte Feldgrenze ist demnach präziser und detaillierter als herkömmliches kartografisches Material. Zudem werden die Feldgrenzen ohnehin von den Landwirten zur Planung und Dokumentation ihrer Arbeitsgänge hinterlegt. Dadurch kann die aufwendige Implementierung von kartografischem Material eingespart werden. Außerdem wird bei der Verwendung von Feldgrenzen ein wesentlich geringerer Speicherplatz benötigt und im Falle der Datenübertragung sind keine großen Bandbreiten erforderlich. Darüber hinaus erfordert die Verarbeitung von Feldgrenzendaten eine deutlich geringere Rechenleistung als die Verarbeitung von kartografischem Material. Werden Feldgrenzendaten statt kartografischen Daten eingesetzt, kann zudem auf eine aufwendige und teure Sensorik verzichtet werden, sodass Kosten und Aufwand eingespart werden und die vergleichsweise höhere Präzision von Feldgrenzendaten gegenüber Sensordaten zum Tragen kommt.

Die landwirtschaftliche Anbaumaschine kann eine Sämaschine, eine Düngemaschine oder eine andere landwirtschaftliche Maschine sein, welche dazu eingerichtet ist, eine landwirtschaftliche Nutzfläche zu bearbeiten. Die Positionserfassungseinheit kann Teil der Anbaumaschine, eines Zug- oder Tragerfahrzeugs oder eines Bedienterminals sein oder als mobiles Endgerät vom Bediener mitgeführt werden, beispielsweise in Form eines Smartphones. Der Datenspeicher kann Teil der Anbaumaschine oder eines Zug- oder Trägerfahrzeugs oder eines Bedienterminals, mittels welchem der Betrieb der Anbaumaschine steuerbar ist, sein. Das Bedienterminal kann ein ISOBUS-Terminal sein. Zudem kann der Datenspeicher Bestandteil eines maschinenexternen elektronischen Geräts, insbesondere eines mobilen Endgeräts oder eines portablen Speichermediums, sein. Das mobile Endgerät kann ein Mobilfunkgerät, insbesondere ein Smartphone, sein. Ferner kann der Datenspeicher eine entfernte Datenbank sein, wobei die zumindest eine Feldgrenze dann per Funk und/oder über das Internet abgerufen wird.

Die Reifendrucksteuereinheit ist vorzugsweise mit dem zumindest einen Reifen der Reifenanordnung über eine Druckleitung verbunden, durch welche der Reifendruck angepasst werden kann. Die Reifendrucksteuereinheit hat Zugriff auf die erfassten Positionsdaten und die auf dem Datenspeicher hinterlegten Feldgrenzen, wobei der Zugriff beispielsweise per Funk und/oder über das Internet und/oder über eine Datenleitung erfolgen kann. Die eine Mehrzahl von Reifen aufweisende Reifenanordnung kann durch hintereinander und/oder nebeneinander angeordnete Reifen gebildet werden. Die Reifen können in Querrichtung und/oder Längsrichtung voneinander beabstandet und/oder benachbart sein. Die Anbaumaschine kann Teil eines Maschinenverbunds, bestehend aus der Anbaumaschine und einem Zug- oder Trägerfahrzeug, sein.

Die Anbaumaschine kann eine gezogene Maschine oder eine getragene Maschine oder alternativ eine selbstfahrende Maschine sein. Bei Luftreifen entspricht der Reifendruck dem Luftdruck des Luftreifens. Das Anpassen des Reifendrucks kann insofern erfolgen, dass der Reifendruck zumindest eines Reifens der Reifenanordnung bei Straßenfahrten, insbesondere auf Asphaltstraßen oder Feldwegen, erhöht und/oder bei Feldfahrten, insbesondere automatisch, verringert wird.

In einer bevorzugten Ausführungsform des erfindungsgemäßen Verfahrens werden die erfassten Positionsdaten oder daraus abgeleitete Positionsinformationen mittels einer Datenverarbeitungseinrichtung mit der zumindest einen auf dem Datenspeicher hinterlegten Feldgrenze verglichen, wobei das Anpassen des Reifendrucks vorzugsweise in Abhängigkeit des Vergleichs der erfassten Positionsdaten oder der daraus abgeleiteten Positionsinformationen mit der zumindest einen Feldgrenze erfolgt. Aus Positionsdaten abgeleitete Positionsinformationen können korrigierte Positionsdaten sein, insbesondere können aus Positionsdaten abgeleitete Positionsinformationen mittels eines Offset-Wertes nachträglich korrigierte Positionsdaten sein. Befindet sich die Positionserfassungseinheit nicht direkt an der Anbaumaschine, sondern beispielsweise an dem Zug- oder Trägerfahrzeug, kann eine Korrekturrechnung, insbesondere eine Addition und/oder Subtraktion eines Offset-Wertes, stattfinden, die die Beabstandung von Anbaumaschine und Positionserfassungseinheit berücksichtigt. Der Offset-Wert ist vorzugsweise der Abstand zwischen der Anbaumaschine, insbesondere deren Reifenanordnung, und der Positionserfassungseinheit. Die Datenverarbeitungseinrichtung kann Teil der Anbaumaschine oder eines Zug- oder Trägerfahrzeugs oder eines Bedienterminals sein. Zudem kann die Datenverarbeitungseinrichtung Bestandteil eines maschinenexternen elektronischen Geräts, insbesondere eines mobilen Endgeräts, sein. Das mobile Endgerät kann ein Mobilfunkgerät, insbesondere ein Smartphone, sein. Ferner kann die Datenverarbeitungseinrichtung eine entfernte Datenverarbeitungseinrichtung, insbesondere ein PC oder ein Server, sein, wobei die erfassten Positionsdaten oder daraus abgeleitete Positionsinformationen und die auf dem Datenspeicher hinterlegten Feldgrenzen dann per Funk und/oder über das Internet übertragen werden.

Die Datenverarbeitungseinrichtung kann beispielsweise untersuchen, ob sich die Anbaumaschine innerhalb oder außerhalb der hinterlegten Feldgrenzen befindet. Die Datenverarbeitungseinrichtung ermöglicht vorzugsweise die Datenverarbeitung, insbesondere die Verarbeitung der Positionsdaten und/oder der aus den Positionsdaten abgeleiteten Positionsinformationen und/oder die Verarbeitung der auf dem Datenspeicher hinterlegten Feldgrenzen. Zudem ermöglicht die Datenverarbeitungseinrichtung die Datenkommunikation zwischen dem Datenspeicher, der Positionserfassungseinheit und der Reifendrucksteuereinheit. Ferner kann die Datenverarbeitungseinrichtung das Anpassen des Reifendrucks durch die Reifendrucksteuereinheit veranlassen. Die Datenkommunikation kann über Datenleitungen und/oder per Funk und/oder über das Internet erfolgen.

In einer anderen bevorzugten Ausführungsform des erfindungsgemäßen Verfahrens erfasst die Positionserfassungseinheit die Positionsdaten mittels eines Satellitennavigationssystems. Die Positionserfassung kann mittels einer Laufzeitmessung erfolgen. Die Positionserfassungseinheit kann einen oder mehrere GPS-Sensoren (Global Positioning System) und/oder ein RTK-GPS-System umfassen. Zur Positionserfassung können verschiedene globale Satellitensysteme, beispielsweise GLONASS oder Galileo, zum Einsatz kommen.

Es ist darüber hinaus ein erfindungsgemäßes Verfahren vorteilhaft, bei welchem die eine Mehrzahl von Reifen aufweisende Reifenanordnung ein Reifenpacker ist. Der Reifenpacker der Anbaumaschine umfasst vorzugsweise einen Mittelrahmen und zwei Seitenrahmen. Die Seitenrahmen können drehbar am Mittelrahmen angeordnet und/oder direkt über zumindest einen Aktor, vorzugsweise mehrere, insbesondere zwei Aktoren, miteinander verbunden sein.

In einer weiteren bevorzugten Ausführungsform des erfindungsgemäßen Verfahrens umfasst die Reifenanordnung einen oder mehrere Fahrwerksreifen und/oder einen oder mehrere Packerreifen, wobei das Anpassen des Reifendrucks an einem oder mehreren der Fahrwerksreifen erfolgt. Vorzugsweise wird beim Anpassen des Reifendrucks der Reifendruck an keinem der Packerreifen angepasst. Bei Packerreifen kann der Bodenkontakt durch Bewegen der Reifen in eine Transportstellung aufgehoben werden. Das Aufheben des Bodenkontakts der Packerreifen kann über einen oder mehrere steuerbare Aktoren erfolgen. Das Aufheben des Bodenkontakts der Packerreifen kann durch Hochklappen und/oder Anheben erfolgen. In einer Arbeitsstellung haben die Packerreifen Bodenkontakt. Die Feldbearbeitung erfolgt in der Arbeitsposition der Packerreifen. Fahrwerksreifen haben permanent auch bei Straßenfahrten Bodenkontakt. Die Anpassung des Reifendrucks erfolgt vorzugsweise nur bei den Fahrwerksreifen, da die Packerreifen bei Straßenfahrten keinen Bodenkontakt haben. Die hochklappbaren Packerreifen können daher permanent bei dem gleichen Reifendruck betrieben werden, der Reifendruck der Fahrwerksreifen kann über die Reifendrucksteuereinheit angepasst werden. Da sich die Traglasten der Fahrwerksreifen von den Packerreifen unterscheiden, ist eine unterschiedliche Anpassung des Reifendrucks sinnvoll. Die hochklappbaren Packerreifen können vorzugsweise in einem Bereich zwischen 1,0 bar und 3,2 bar, insbesondere bei 1,8 bar Reifendruck betrieben werden. Der Reifendruck der Fahrwerksreifen kann bei Feldarbeit in einem Bereich zwischen 1,0 bar und 3,2 bar, insbesondere bei 1,8 bar, liegen und bei Straßenfahrt auf einen Wert zwischen 2,5 bar und 7 bar, insbesondere auf 4,5 bar, angepasst werden. Die Traglast eines einzelnen Reifens unterscheidet sich in Abhängigkeit davon, ob sich die Packerreifen in der Transportstellung oder in der Arbeitsstellung befinden. In der Transportstellung kann die Traglast eines einzelnen Reifens beispielsweise bis zu 3000kg betragen. In der Arbeitsstellung kann die Traglast eines einzelnen Reifens beispielsweise zwischen 100kg und 500kg betragen. Der Reifenpacker kann beispielsweise 2 bis 6, insbesondere 4, Fahrwerksreifen umfassen. Der Reifenpacker kann beispielsweise 4 bis 10, insbesondere 8, Packerreifen umfassen.

Es ist darüber hinaus ein erfindungsgemäßes Verfahren bevorzugt, bei welchem das Anpassen des Reifendrucks des zumindest einen Reifens selbsttätig unter Berücksichtigung der Positionsdaten oder automatisch nach manueller Bestätigung einer Bedieneraufforderung erfolgt. Das Anpassen des Reifendrucks kann vollkommen selbsttätig ohne jegliche Eingriffe eines Bedieners oder erst nach einer Bestätigung einer Bedieneraufforderung erfolgen. Die Bedieneraufforderung kann eine akustische Bedieneraufforderung, beispielsweise ein Hinweiston, und/oder eine optische Bedieneraufforderung, beispielsweise ein Hinweis auf einer Anzeige des Bedienterminals oder ein Blinken und/oder Leuchten einer Hinweisleuchte, sein. Die Bedieneraufforderung kann durch einen Bediener bestätigt werden. Die Bestätigung kann vorzugsweise mittels Sprachsteuerung, Gestensteuerung, Knopfdruck und/oder einer Berührung einer berührungsempfindlichen Anzeige des Bedienterminals bestätigt werden.

In einer Weiterbildung des erfindungsgemäßen Verfahrens werden beim Anpassen des Reifendrucks der Reifendruck eines Reifens oder mehrerer Reifen der Reifenanordnung mit einem ersten Reifendruck und ein anderer Reifen oder mehrere andere Reifen mit einem zweiten Reifendruck beaufschlagt. Der erste Reifendruck unterscheidet sich von dem zweiten Reifendruck. Es kann vorzugsweise jeder Reifen der Reifenanordnung unabhängig von den übrigen Reifen der Reifenanordnung mit einem reifenindividuellen Reifendruck beaufschlagt werden.

In einer weiteren bevorzugten Ausführungsform des erfindungsgemäßen Verfahrens erfolgt das Anpassen des Reifendrucks bei Annährung der Anbaumaschine an die zumindest eine Feldgrenze und/oder beim Überqueren der zumindest einen Feldgrenze durch die Anbaumaschine. Vorzugsweise erfolgt das Anpassen des Reifendrucks bei Erreichen oder Unterschreiten eines spezifischen Reifendruckanpassabstandes zur Feldgrenze. Um zu gewährleisten, dass der gewünschte Reifendruck eingestellt ist, sobald die zumindest eine Feldgrenze überquert wird, kann die Anpassung des Reifendrucks schon vor Erreichen der zumindest einen Feldgrenze eingeleitet werden, sodass das Anpassen des Reifendrucks bei Überfahrt der zumindest einen Feldgrenze abgeschlossen ist.

In einer anderen bevorzugten Ausführungsform des erfindungsgemäßen Verfahrens erfolgt das Anpassen des Reifendrucks bei Annährung der Anbaumaschine an eine sich im Verlauf der zumindest einen Feldgrenze befindenden Feldeinfahrt und/oder -ausfahrt und/oder beim Überqueren einer sich im Verlauf der zumindest einen Feldgrenze befindenden Feldeinfahrt und/oder -ausfahrt durch die Anbaumaschine. Ein Feld kann beispielweise eine oder mehrere Feldeinfahrten und/oder Feldausfahrten haben, an denen der Landwirt mit seiner Maschine die Feldgrenze regelmäßig überquert, da eine Feldgrenze beispielsweise wegen eines Grabens und/oder wegen einer Hecke nur an bestimmten Stellen überfahrbar sein kann. Die Feldgrenzendaten umfassen Informationen zu den Positionen und/oder der Beschaffenheit der Feldeinfahrten und/oder Feldausfahrten. Eine Feldeinfahrt kann sich durch einen feldeinwärts gerichteten Richtungsvektor von einer Feldausfahrt mit einem feldauswärts gerichteten Richtungsvektor unterscheiden, sodass eine Unterscheidung zwischen Feldfahrt und Straßenfahrt erfolgen kann.

In einer Weiterbildung des erfindungsgemäßen Verfahrens erfolgt das Anpassen des Reifendrucks infolge einer aktuellen Maschinenkonfiguration oder einer geplanten Änderung der Maschinenkonfiguration der Anbaumaschine und/oder infolge eines aktuellen Betriebsstatus oder einer geplanten Änderung des Betriebsstatus der Anbaumaschine. Die Anbaumaschine kann unterschiedliche Maschinenkonfigurationen aufweisen, insbesondere einen hochgeklappten Reifenpacker, einen heruntergeklappten Reifenpacker, oder verschiedene Betriebsstatus, wie eine aktivierte oder deaktivierte Saatgutablage. Die Anpassung des Reifendrucks kann an diese verschiedenen Konfigurationen oder Status gekoppelt sein, sodass beispielsweise der Reifendruck der Reifen erhöht wird, sobald der Reifenpacker hochgeklappt und/oder der Sävorgang gestoppt wird. Dafür kann der Klappmechanismus beispielsweise mit einem Klappsensor ausgestattet sein.

Es ist ferner ein erfindungsgemäßes Verfahren bevorzugt, bei welchem das Anpassen des Reifendrucks in Abhängigkeit der Bewegungsgeschwindigkeit der Anbaumaschine und/oder in Abhängigkeit der Bodeneigenschaften innerhalb und/oder im Nahbereich der zumindest einen Feldgrenze und/oder in Abhängigkeit des Straßenzustands erfolgt. Alternativ oder zusätzlich erfolgt das Anpassen des Reifendrucks in Abhängigkeit der Art einer zu der zumindest einen Feldgrenze führenden und/oder entlang der zumindest einen Feldgrenze verlaufenden Straße und/oder in Abhängigkeit des Füllstands eines Vorratsbehälters der Anbaumaschine. Alternativ oder zusätzlich erfolgt das Anpassen des Reifendrucks in Abhängigkeit der Wetterbedingungen innerhalb und/oder im Nahbereich der zumindest einen Feldgrenze und/oder auf einer zu der zumindest einen Feldgrenze führenden und/oder entlang der zumindest einen Feldgrenze verlaufenden Straße und/oder in Abhängigkeit der aktuellen und/oder einer erwarteten Bewegungsdynamik und/oder Lage der Anbaumaschine und/oder in Abhängigkeit der aktuellen und/oder einer erwarteten Fahrdynamik und/oder Fahrzeuglage des Zug- oder Trägerfahrzeugs und/oder in Abhängigkeit des Zustands der Reifen. Das Anpassen des Reifendrucks kann bei Überschreiten und/oder Unterschreiten eines Grenzwertes einer Bewegungsgeschwindigkeit der Anbaumaschine erfolgen. Die Bewegungsgeschwindigkeit kann vorzugsweise über zumindest einen Geschwindigkeitssensor erfasst werden. Der zumindest eine Geschwindigkeitssensor kann Teil des Zug- oder Trägerfahrzeugs und/oder der Anbaumaschine sein. Der zumindest eine Geschwindigkeitssensor kann Bestandteil des Bedienterminals sein. Die Bewegungsgeschwindigkeit kann zudem über einen GPS-Sensor erfasst werden. Der GPS-Sensor kann Bestandteil der Positionserfassungseinrichtung sein. Das Anpassen des Reifendrucks kann erfolgen, sobald Grenzwerte aufgrund der Bodeneigenschaften innerhalb und/oder im Nahbereich der zumindest einen Feldgrenze überschritten oder unterschritten werden. Sich durch die Bodeneigenschaften ändernde Werte können beispielsweise die Einsinktiefe der Reifen in den Boden und/oder der Schlupf der angetriebenen Räder sein. Der Schlupf der angetriebenen Räder kann beispielsweise mittels zumindest eines Raddrehzahlsensor erfasst werden. Die Einsinktiefe der Reifen in den Boden kann beispielsweise über zumindest einen Abstandssensor und/oder zumindest eine Kamera oder einen anderweitigen berührungslosen Sensor erfasst werden. Das Anpassen des Reifendrucks kann erfolgen, sobald Grenzwerte aufgrund des Straßenzustands und/oder der Art einer zu der Feldgrenze führenden und/oder entlang der Feldgrenze verlaufenden Straße überschritten oder unterschritten werden. Sich durch den Straßenzustand oder die Art einer Straße ändernde Werte können beispielsweise durch Unebenheiten im Straßenbelag verursachte Erschütterungen oder die Einsinktiefe der Reifen in den Boden, beispielsweise bei matschigen Feldwegen, sein. Der Straßenzustand kann beispielsweise mittels zumindest eines Beschleunigungssensors, welcher dazu eingerichtet ist, durch Unebenheiten im Straßenbelag verursachte Erschütterungen zu erfassen, ermittelt werden. Weiterhin kann der Straßenzustand beispielsweise von einer Datenbank abgerufen werden. Die Datenbank kann Bestandteil der Anbaumaschine oder des Träger- oder Zufahrzeugs sein. Die Datenbank kann ferner eine maschinenexterne entfernte Datenbank sein. Das Anpassen des Reifendrucks kann erfolgen, wenn Grenzwerte des Füllstands eine Vorratsbehälters der Anbaumaschine überschritten oder unterschritten werden. Je leerer der Vorratsbehälter, beispielsweise des Saatguts, ist, desto leichter wird die Maschine insgesamt, sodass der Reifendruck für eine optimale Aufstandsfläche der Reifen auf dem Boden angepasst werden muss, beispielsweise auf 2,8 bar bei Straßenfahrten. Der Füllstand des Vorratsbehälters kann beispielsweise über die Kenntnis der eingefüllten und der auf dem Feld ausgebrachten Menge des Behälterinhalts ermittelt werden. Weiterhin kann der Füllstand des Vorratsbehälters über eine geeignete Sensorik, beispielsweise über zumindest eine Kamera im Vorratsbehälter, oder über Wiegezellen ermittelt werden. Das Anpassen des Reifendrucks kann aufgrund aktueller oder sich zu erwartenden ändernden Wetterbedingungen angepasst werden. Wetterbedingungen können beispielsweise der aktuelle oder zu erwartende Niederschlag oder die aktuelle oder zu erwartende Umgebungstemperatur sein, da beispielsweise bei Regen der Boden aufweichen oder bei Temperaturen unterhalb des Gefrierpunkts der Boden gefrieren kann. Die Wetterbedingungen können über eine Wetterstation, welche geeignete Sensorik zumindest zur Bestimmung des Niederschlags und der Umgebungstemperatur umfasst, erfasst werden. Die Wetterstation kann Bestandteil der Anbaumaschine und/oder des Zug- oder Trägerfahrzeugs sein. Weiterhin können die Wetterbedingungen durch Abrufen von Wetterdaten eines Wetterdienstes ermittelt werden. Die Wetterdaten können beispielsweise über das Internet abgerufen werden. Das Anpassen des Reifendrucks kann erfolgen, sobald Grenzwerte der aktuellen und/oder einer erwarteten Bewegungsdynamik und/oder Lage der Anbaumaschine und/oder der aktuellen und/oder einer erwarteten Fahrdynamik oder Fahrzeuglage des Zug- oder Trägerfahrzeugs überschritten oder unterschritten werden. Bei Kurvenfahrt wird beispielsweise der kurvenäußerste Reifen temporär deutlich stärker belastet als ein Reifen auf der Kurveninnenseite, sodass eine zumindest temporäre Anpassung des Reifendrucks beispielsweise bei Kurvenfahrten sinnvoll sein kann. Die aktuelle und/oder die erwartete Bewegungsdynamik und/oder Lage der Anbaumaschine und/oder die aktuelle und/oder die erwartete Fahrdynamik oder Fahrzeuglage des Zug- oder Trägerfahrzeugs kann mittels zumindest eines Beschleunigungssensors und/oder mittels zumindest eines Neigungssensors ermittelt werden. Insbesondere Kurvenfahrten können auch über Raddrehzahlsensoren ermittelt werden. Dabei macht man sich die Tatsache zunutze, dass sich kurveninnere Räder langsamer drehen als kurvenäußere Räder. Das Anpassen des Reifendrucks kann erfolgen, sobald Grenzwerte überschritten oder unterschritten werden, die den Zustand der Reifen betreffen. Über die Jahre kann sich der Zustand der Gummimischung der Reifen ändern, da Gummi mit der Zeit aushärtet. Deshalb kann es notwendig sein, die Alterung der Reife in die Reifendruckanpassung einzubeziehen. Der Zustand der Reifengummimischung wird vorzugsweise über das in der Wartungshistorie der Anbaumaschine und/oder des Zug- oder Trägerfahrzeugs hinterlegte Alter der Reifen ermittelt. Alternativ oder zusätzlich kann der Zustand der Reifengummimischung über die Walkcharakteristik mittels geeigneter Sensorik, beispielsweise mittels einer Kamera, ermittelt werden. Dabei macht man sich zunutze, dass sich die Walkcharakteristik mit zunehmendem Alter der Reifen und der damit einhergehenden Aushärtung der Gummimischung ändert. Vorzugsweise sind Grenzwerte, bei welchen eine Erhöhung des Reifendrucks veranlasst wird, andere Grenzwerte als die Grenzwerte, bei denen eine Verringerung des Reifendrucks veranlasst wird. Das Anpassen des Reifendrucks kann außerdem einer Plausibilitätsprüfung unterzogen werden. Der aktuell eingestellte Reifendruck und/oder eine zu erwartende Reifendruckanpassung werden vorzugsweise einer Plausibilitätsprüfung unterzogen. Vorzugsweise wird zu einer Plausibilitätsprüfung zumindest einer der genannten Parameter mit zumindest einem anderen der genannten Parameter verglichen. Dazu kann beispielsweise verglichen werden, ob die aktuelle Bewegungs- und/oder Fahrgeschwindigkeit der Anbaumaschine und/oder des Zug- oder Trägerfahrzeugs bei dem aktuellen Standort und/oder den aktuell vorherrschenden Bodenverhältnissen plausibel scheint. Es wäre beispielsweise unplausibel, wenn die Standortbestimmung ergibt, dass sich die Anbaumaschine innerhalb zumindest einer Feldgrenze, also auf einem Feld, befindet, die Geschwindigkeitsmessung der Anbaumaschine hingegen 60 km/h ergibt. Bei nicht erfolgreicher Plausibilitätsprüfung werden vorzugsweise weitere Schritte eingeleitet, beispielsweise der Abgleich weiterer Parameter zur Bestätigung der Plausibilitätsprüfung und/oder eine entsprechende Korrektur des Reifendrucks. Die der Erfindung zugrundeliegende Aufgabe wird ferner durch ein Steuersystem der eingangs genannten Art gelöst, wobei das erfindungsgemäße Steuersystem eine Positionserfassungseinheit, welche dazu eingerichtet ist, Positionsdaten zur Bestimmung der Position der Anbaumaschine zu erfassen, eine Reifendrucksteuereinheit, welche dazu eingerichtet ist, den Reifendruck des zumindest einen Reifens der Reifenanordnung in Abhängigkeit der erfassten Positionsdaten und zumindest einer Feldgrenze anzupassen, und einen Datenspeicher, auf welchem die zumindest eine Feldgrenze hinterlegt ist, aufweist.

In einer bevorzugten Ausführungsform des erfindungsgemäßen Steuersystems ist dieses dazu eingerichtet, das Verfahren zum Steuern des Reifendrucks nach einer der vorstehenden Ausführungsformen auszuführen. Hinsichtlich der Vorteile und Modifikationen des erfindungsgemäßen Steuersystems wird somit auf die Vorteile und Modifikationen des erfindungsgemäßen Verfahrens zum Steuern des Reifendrucks verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: einen ein erfindungsgemäßes Steuersystem aufweisenden Maschinenverbund in einer perspektivische Darstellung;
- Fig. 2: die Änderung der Einsinktiefe eines Reifen bei drei unterschiedlichen Reifendrücken und die daraus resultierende Änderung des Zugkraftbedarfs zur Überwindung eines vorlaufenden Erdkeils;
- Fig. 3: eine landwirtschaftliche Anbaumaschine samt eines erfindungsgemäßen Steuersystems in einer schematischen Darstellung, wobei sich der Reifenpacker in der Arbeitsstellung befindet;
- Fig. 4: eine Reifenanordnung, bei welcher der Reifendruck mittels des erfindungsgemäßen Verfahrens gesteuert wird, in einer schematischen Darstellung;
- Fig. 5: die in der Fig. 3 abgebildete landwirtschaftliche Anbaumaschine in einer perspektivischen Darstellung, wobei sich der Reifenpacker in der Transportstellung befindet;
- Fig. 6: eine Detailansicht von Reifen einer landwirtschaftlichen Anbaumaschine mit Teilen eines erfindungsgemäßen Steuersystems;
- Fig. 7: eine weitere Detailansicht der in Fig. 6 abgebildeten Reifen;
- Fig. 8: eine Frontansicht eines Bedienterminals eines erfindungsgemäßen Steuersystems;
- Fig. 9: eine Frontansicht eines Bedienterminals eines weiteren erfindungsgemäßen Steuersystems; und
- Fig. 10: eine schematische Darstellung des Reifendruckverlaufs bei unterschiedlichen Betriebsbedingungen der landwirtschaftlichen Anbaumaschine.

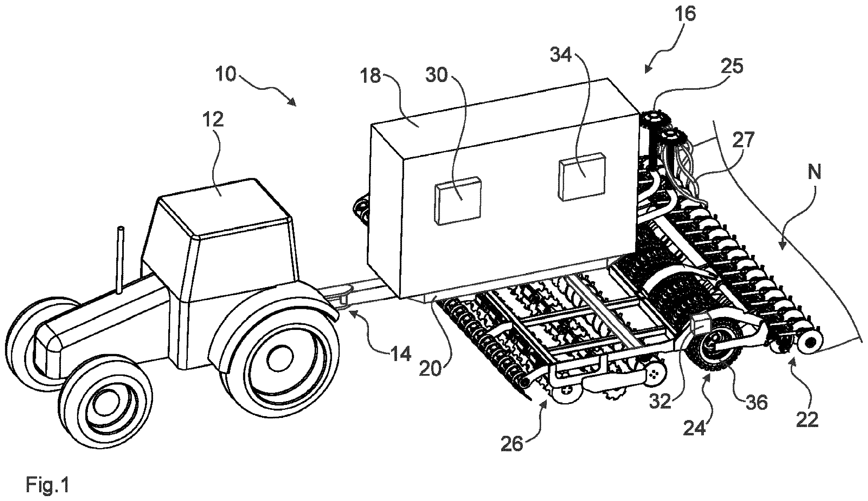

Die Fig. 1 zeigt einen Maschinenverbund 10 mit einem als Traktor ausgebildeten Zugfahrzeug 12 und einer landwirtschaftlichen Anbaumaschine 16. Die Anbaumaschine 16 ist in diesem Ausführungsbeispiel als Sämaschine ausgebildet. Die Anbaumaschine 16 bearbeitet eine landwirtschaftliche Nutzfläche N. Das Zugfahrzeug 12 und die Anbaumaschine 16 sind über eine Kupplungsvorrichtung 14 reversibel lösbar miteinander verbunden.

Die Anbaumaschine 16 umfasst einen Vorratsbehälter 18, welcher beispielsweise mit Saatgut oder Dünger befüllt sein kann. Weiterhin umfasst die Anbaumaschine 16 einen Trägerrahmen 20, an welchem Säschare 22, eine Reifenanordnung 24 und ein Scheibenfeld 26 angeordnet sind. Aus dem Vorratsbehälter 18 wird Saatgut über einen Verteilerkopf 25 durch Saatgutleitungen 27 zu den Säscharen 22 gefördert. Die Säschare 22 legen das Saatgut auf der Nutzfläche N ab. Die Reifenanordnung 24 umfasst nebeneinander angeordnete Reifen 36.

In diesem Ausführungsbeispiel umfasst die Anbaumaschine 16 außerdem eine Positionserfassungseinheit 30, eine Reifendrucksteuereinheit 32 und einen Datenspeicher 34 des erfindungsgemäßen Steuersystems 28. Die Positionserfassungseinheit 30 ist dazu eingerichtet, satellitengestützte Positionsdaten zu erfassen und umfasst zu diesem Zweck einen GPS-Empfänger. Die Positionserfassungseinheit 30 ist an einem Referenzpunkt der Anbaumaschine 16 verbaut. Die Positionserfassungseinheit, die Reifendrucksteuereinheit 32 und der Datenspeicher 34 sind signalleitend miteinander verbunden. Die Reifendrucksteuereinheit 32 kann einen Druckluft-Kompressor umfassen.

Mittels des Steuersystems 28 kann der Reifendruck P der Reifen 36 der Reifenanordnung 24 der landwirtschaftlichen Anbaumaschine 16 eingestellt werden.

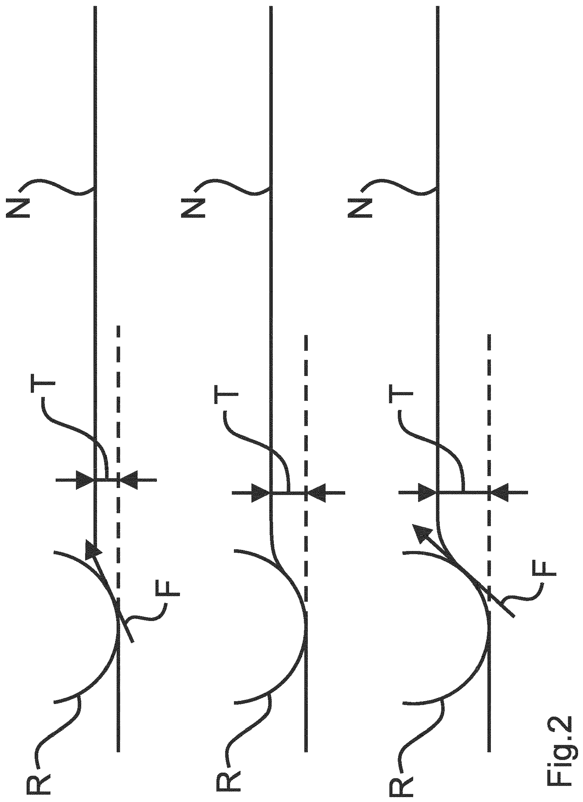

Die Fig. 2 zeigt die Auswirkung einer Reifendruckanpassung auf die Einsinktiefe T eines Reifens 36 in den Boden der Nutzfläche N beispielhaft für drei verschiedene Situationen. Die schematische Darstellung zeigt, dass die Einsinktiefe T bei einem niedrigen Reifendruck P, wie in der obersten der drei Situationen in der Fig. 2 dargestellt, am geringsten ist. Bei einer niedrigen Einsinktiefe T des Reifens 36 ist außerdem die Widerstandskraft F, die beim Rollen des Reifens 36 überwunden werden muss, am niedrigsten, da sich vor dem Reifen nur ein niedriger Erdkeil aufbaut. Bei einem höheren Reindruck P in der mittleren Situation und dem höchsten Reifendruck P in der untersten Situation vergrößert sich die Einsinktiefe T und somit auch die Widerstandskraft F infolge eines höheren vorlaufenden Erdkeils. Die Fig. 2 zeigt somit anschaulich, dass ein niedriger Reifendruck P bei der Fahrt auf einer Nutzfläche N die Widerstandskraft F durch eine geringere Einsinktiefe T reduzieren kann, was beispielsweise positive Auswirkungen auf den Kraftstoffverbrauch der Anbaumaschine 16 hat.

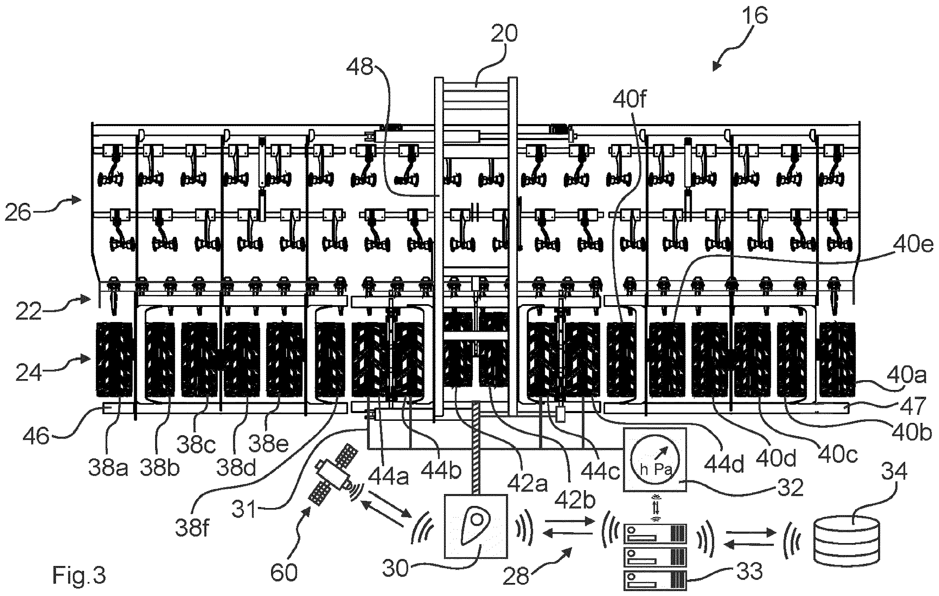

Die Fig. 3 zeigt ein Ausführungsbeispiel einer als Sämaschine ausgeführten landwirtschaftlichen Anbaumaschine 16. Die Anbaumaschine 16 umfasst Teile eines erfindungsgemäßen Steuersystems 28. Das Steuersystem 28 umfasst eine Reifendrucksteuereinheit 32, eine Datenverarbeitungseinrichtung 33, eine Positionserfassungseinheit 30 und einen Datenspeicher 34.

Die Anbaumaschine 16 umfasst einen Trägerrahmen 20, an welchem die Säschare 22, die Reifenanordnung 24 und das Scheibenfeld 26 angeordnet sind. Der Trägerrahmen umfasst zwei Seitenrahmen 46, 47 und einen Mittelrahmen 48, wobei die Säschare 22 und die Scheiben des Scheibenfeldes 26 teilweise an dem Seitenrahmen 46, zu einem anderen Teil an dem Seitenrahmen 47 und zu einem weiteren Teil an dem Mittelrahmen 48 angeordnet sind. Die Reifenanordnung 24 ist als Reifenpacker ausgebildet, welcher in diesem Ausführungsbeispiel Packerreifen 38a-38f, 40a-40f und 42a, 42b und Fahrwerksreifen 44a-44d umfasst und welcher sich in einer Arbeitsstellung befindet. Die Packerreifen 38a-38f sind an einem ersten Seitenrahmen 46 der Anbaumaschine 16 angeordnet. Die Packerreifen 40a-40f sind an einem zweiten Seitenrahmen 47 der Anbaumaschine 16 angeordnet. Die Packerreifen 42a, 42b und die Fahrwerksreifen 44a-44d sind an einem Mittelrahmen 48 der Anbaumaschine 16 angeordnet. Die Fahrwerksreifen 44a-44d sind mittels Druckleitungen 31 mit der Reifendrucksteuereinheit 32 fluidleitend verbunden.

In diesem Ausführungsbeispiel findet die Datenübertragung zwischen allen Bestandteilen des Steuersystems 28 drahtlos per Funk statt. Die Positionserfassungseinheit 30 kommuniziert zur Erfassung der Position der Anbaumaschine 16 per GPS mit einem Satellitennavigationssystem 60. Die Positionserfassungseinheit 30 überträgt Positionsdaten an die Datenverarbeitungseinrichtung 33. Auf dem Datenspeicher 34 sind Feldgrenzendaten hinterlegt. Die Datenverarbeitungseinrichtung 33 ruft die Feldgrenzendaten von dem Datenspeicher 34 ab. Die Datenverarbeitungseinrichtung 33 vergleicht die Feldgrenzendaten mit den Positionsdaten. Die Datenverarbeitungseinrichtung 33 ist datenleitend mit der Reifendrucksteuereinheit 32 verbunden und kann diese dazu veranlassen, den Reifendruck der Fahrwerksreifen 44a-44d in Abhängigkeit des Vergleichs der Positionsdaten mit den Feldgrenzendaten anzupassen.

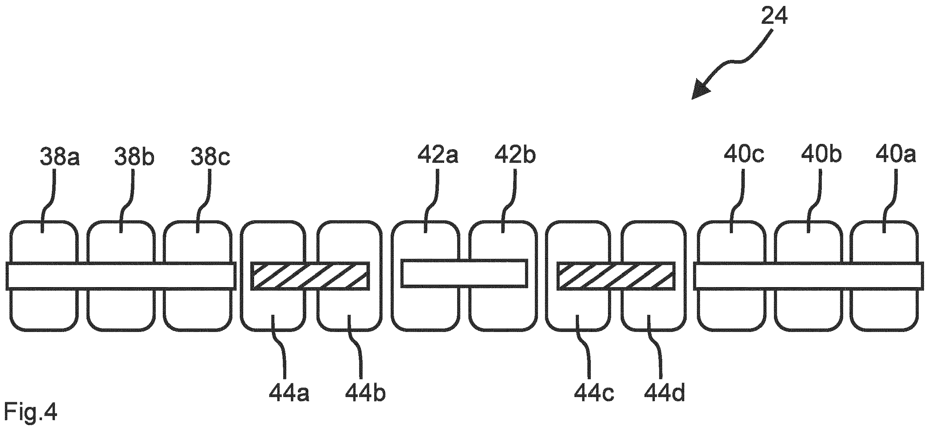

Die Fig. 4 zeigt eine weitere Ausführungsform einer Reifenanordnung 24 mit Packerreifen 38a-38c, 40a-40c und 42a, 42b und Fahrwerksreifen 44a-44d in einer schematischen Darstellung.

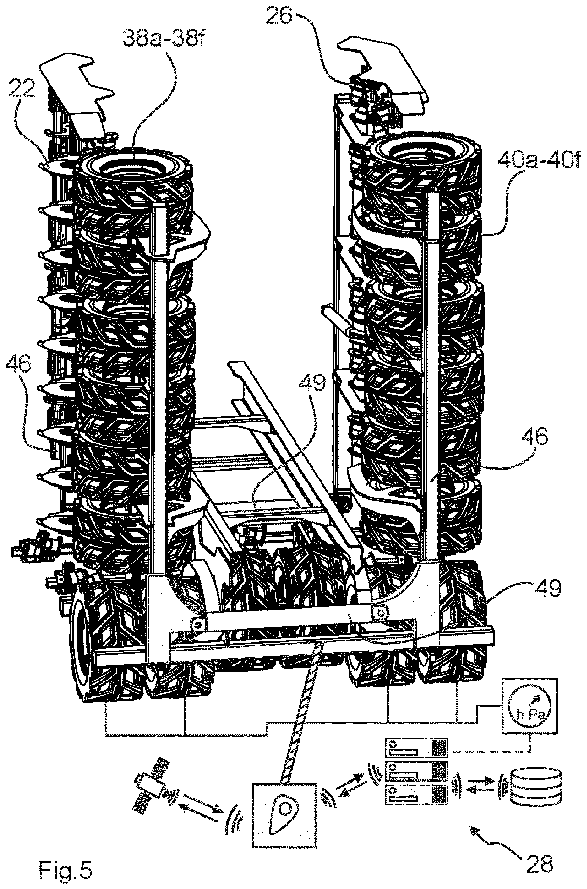

Die Fig. 5 zeigt die landwirtschaftliche Anbaumaschine 16 aus Fig. 3 in einer Transportstellung. Mittels Aktoren 49, welche als Hydraulikzylinder ausgebildet sein können, können die Seitrahmen 46, 47 um 90 Grad hochgeklappt werden, sodass die an den Seitenrahmen 46, 47 angeordneten Säscharen 22, Scheiben des Scheinfeldes 26 und die Packerreifen 38a-38f sowie die Packerreifen 40a-40f keinen Kontakt zum Boden mehr haben.

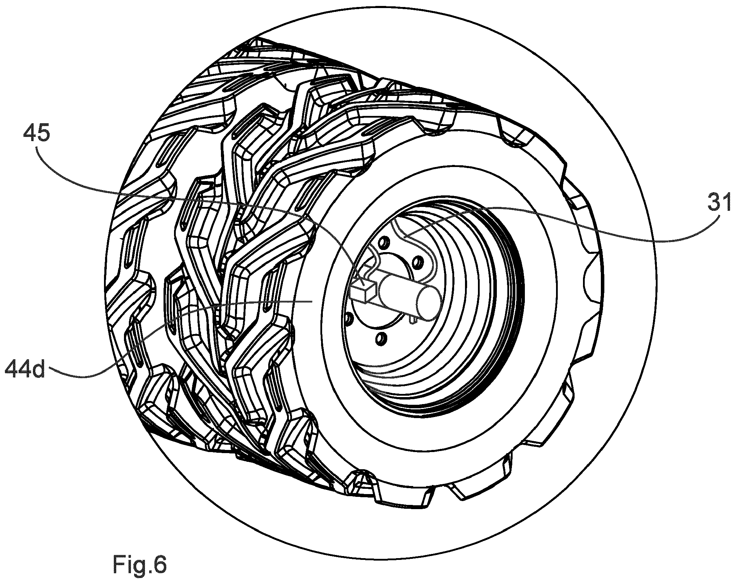

Die Fig. 6 zeigt einen Fahrwerksreifen 44d in einer Detailansicht. Der Fahrwerksreifen 44d weist ein Ventil 45 auf, durch welches die Reifendrucksteuereinheit 32 über die Druckleitung 31 den Fahrwerksreifen 44d mit Luft befüllen oder Luft ablassen kann.

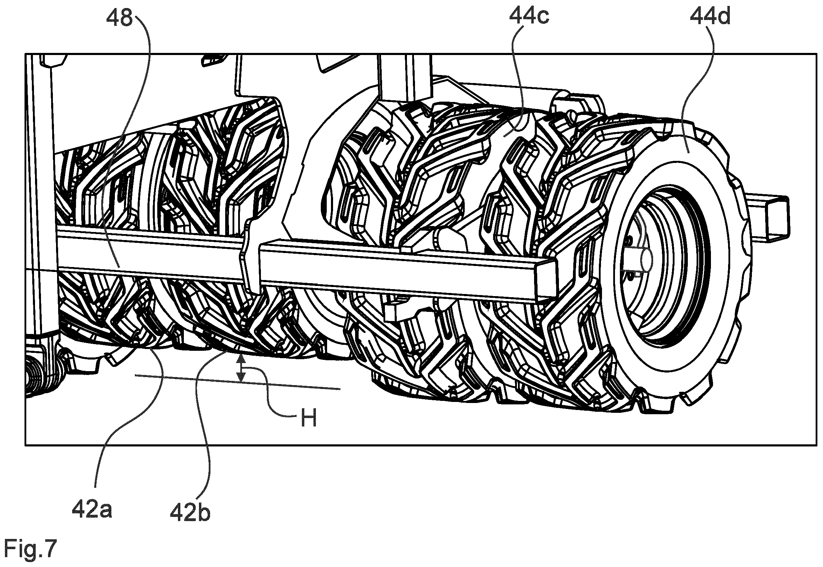

Die Fig. 7 zeigt zwei Fahrwerksreifen 44c und 44d und die am Mittelrahmen 48 angeordneten Packerreifen 42a und 42b in einer Detailansicht. Die am Mittelrahmen 48 angeordneten Packerreifen 42a und 42b können durch Anheben vom Boden in eine Höhe H in eine Transportstellung gebracht werden.

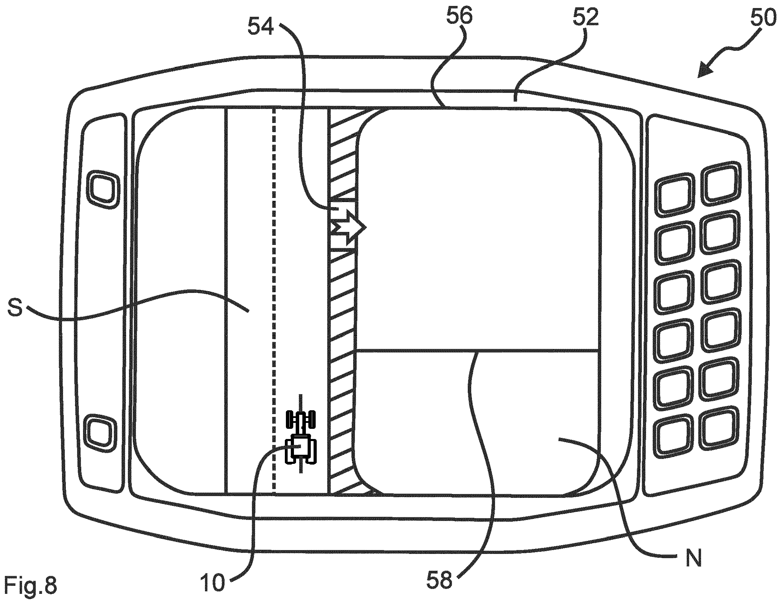

Die Fig. 8 zeigt ein Bedienterminal 50, mit welchem der Betrieb der Anbaumaschine 16 steuerbar ist. Das Bedienterminal 50 umfasst eine Anzeige 52, auf welcher in diesem Ausführungsbeispiel eine virtuelle Obersicht des Maschinenverbunds 10 und seiner Umgebung dargestellt ist. Das Bedienterminal 50 kann ein ISOBUS-Terminal sein. Der Maschinenverbund 10 befindet sich auf einer Straße S, welche entlang einer Nutzfläche N verläuft. Die Straße S und die Nutzfläche N sind durch eine Feldeinfahrt 54 verbunden, über die der Maschinenverbund 10 die Nutzfläche N befahren kann. Die Nutzfläche N ist von einer Feldgrenze 56 von umliegenden Flächen getrennt. Die Nutzfläche N ist weiterhin durch eine Feldgrenze 58 intern unterteilt.

Der Reifendruck P kann angepasst werden, sobald sich die Anbaumaschine 16 der Feldgrenze 56, 58 annähert. Der Reifendruck P kann angepasst werden, sobald die Anbaumaschine 16 die Feldgrenze 56, 58 überquert. Weiterhin kann der Reifendruck P angepasst werden, wenn sich die Anbaumaschine an die Feldeinfahrt 54 annähert oder die Feldeinfahrt 54 überquert.

Das Bedienterminal 50 kann den Datenspeicher 34 umfassen. Das Bedienterminal 50 kann zudem die Positionserfassungseinheit 30 umfassen. Weiterhin kann das Bedienterminal 50 die Datenverarbeitungsvorrichtung 33 umfassen. Die Feldgrenzen 56, 58 sowie die Position der Feldeinfahrt 54 sind auf dem Datenspeicher 34 gespeichert.

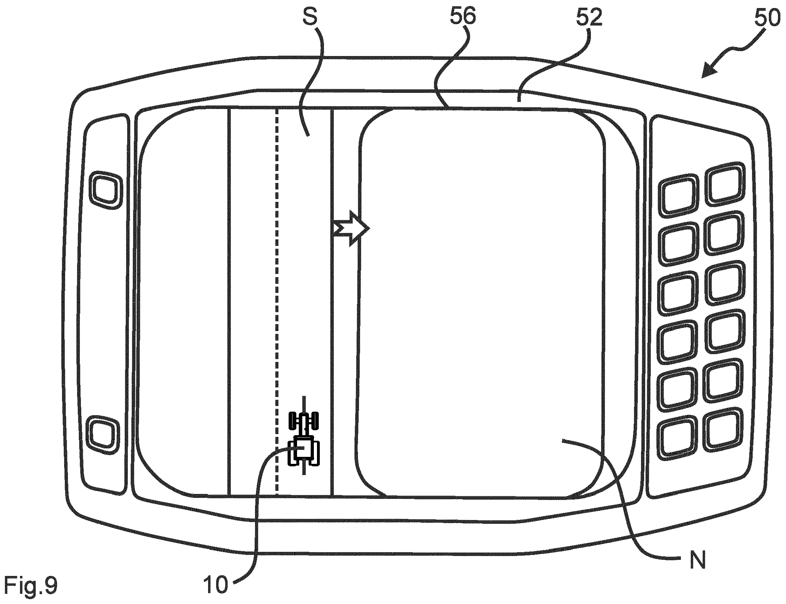

Die Fig. 9 zeigt das Bedienterminal 50 mit der Anzeige 52, worauf die Nutzfläche N, eine entlang der Nutzfläche N verlaufende Straße S und den Maschinenverbund 10 aus einer Obersicht angezeigt werden. Die Nutzfläche N ist durch eine umlaufende Feldgrenze 56 von umliegenden Flächen getrennt.

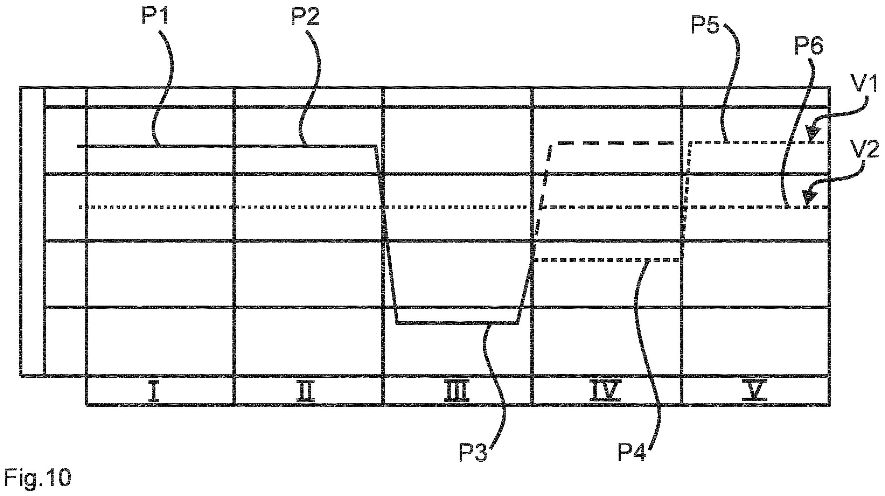

Die Fig. 10 zeigt zwei Druckverläufe V1 und V2 in einer schematischen Darstellung. Der Druckverlauf V1 zeigt die Druckanpassung des Reifendrucks P bei verschiedenen Betriebsstatus I-V der Anbaumaschine 16. Der Druckverlauf V2 zeigt zum Vergleich einen beispielhaften konstanten Reifendruck P6 einer Anbaumaschine, bei welcher keine Reifendruckanpassung durchgeführt wird.

In einem Betriebsstatus I der Anbaumaschine 16 wird ein Reifendruck P1 eingestellt. In einem Betriebsstatus II der Anbaumaschine 16 wird ein Reifendruck P2 eingestellt. In einem Betriebsstatus III der Anbaumaschine 16 wird ein Reifendruck P3 eingestellt. In einem Betriebsstatus IV wird ein Reifendruck P4 eingestellt. In einem Betriebsstatus V wird ein Reifendruck P5 eingestellt.

In diesem Ausführungsbeispiel kann der Betriebsstatus I die Befüllung des Vorratsbehälters 18 mit Saatgut und der Betriebsstatus II die Fahrt der Anbaumaschine 16 über eine Straße S mit vollem Vorratsbehälter 18 sein, wobei in diesem Beispiel der Reifendruck P1 im Betriebsstatus I und der Reifendruck P2 im Betriebsstatus II identisch sind. Im Betriebsstatus III kann sich die Anbaumaschine 16 zur Aussaat auf der Nutzfläche N befinden, wobei ein niedrigerer Reifendruck P3 eingestellt wird, wenn sich die Anbaumaschine 16 auf der Nutzfläche N befindet. Im Betriebsstatus IV kann eine Fahrt der Anbaumaschine 16 mit leerem Vorratsbehälter 18 über die Straße S erfolgen, wobei dann ein Reifendruck P4 eingestellt wird, welcher höher ist als der Reifendruck P3, aber niedriger als einer der Reifendrücke P1 und P2. Ist der Vorratsbehälter 18 der Anbaumaschine 16 nicht geleert, kann der Reifendruck P4 beispielsweise mit dem Reifendruck P2 bei gefülltem Vorratsbehälter 18 identisch sein. Im Betriebsstatus V kann ein erneutes Befüllen des Vorratsbehälters 18 stattfinden, wobei der eingestellte Reifendruck P5 dann mit den Reifendrücken P1 und P5 identisch ist.

### Bezugszeichen

- 10: Maschinenverbund
- 12: Zugfahrzeug
- 14: Kupplungsvorrichtung
- 16: Anbaumaschine
- 18: Vorratsbehälter
- 20: Trägerrahmen
- 22: Säschare
- 24: Reifenanordnung
- 25: Verteilerkopf
- 26: Scheibenfeld
- 27: Saatgutleitungen
- 28: Steuersystem
- 30: Positionserfassungseinheit
- 31: Druckleitungen
- 32: Reifendrucksteuereinheit
- 33: Datenverarbeitungseinrichtung
- 34: Datenspeicher
- 36: Reifen
- 38a-38f: Packerreifen
- 40a-40f: Packerreifen
- 42a, 42b: Packerreifen
- 44a-44d: Fahrwerksreifen
- 45: Ventil
- 46: Seitenrahmen
- 47: Seitenrahmen
- 48: Mittelrahmen
- 49: Aktor
- 50: Bedienterminal
- 52: Anzeige
- 54: Feldeinfahrt
- 56: Feldgrenze
- 58: Feldgrenze
- 60: Satellitennavigationssystem

- N: Nutzfläche
- F: Kraft
- H: Höhe
- V1, V2: Druckverläufe
- P: Reifendruck
- P1-P6: Reifendrücke
- S: Straße
- T: Einsinktiefe

- I-V: Betriebsstatus

## Patentansprüche

1. Verfahren zum Steuern des Reifendrucks (P) zumindest eines Reifens (36) einer eine Mehrzahl von Reifen aufweisenden Reifenanordnung (24) einer landwirtschaftlichen Anbaumaschine (16), insbesondere einer Sämaschine, mit den Schritten:
- Erfassen von Positionsdaten, mittels welchen die Position der Anbaumaschine (16) bestimmbar ist, durch eine Positionserfassungseinheit (30), und
- Anpassen des Reifendrucks (P) zumindest eines Reifens (36) der Reifenanordnung (24) mittels einer Reifendrucksteuereinheit (32) in Abhängigkeit der erfassten Positionsdaten und zumindest einer auf einem Datenspeicher (34) hinterlegten Feldgrenze (56, 58).

2. Verfahren nach Anspruch 1,
**dadurch gekennzeichnet, dass** die erfassten Positionsdaten oder daraus abgeleitete Positionsinformationen mittels einer Datenverarbeitungseinrichtung (33) mit der zumindest einen auf dem Datenspeicher (34) hinterlegten Feldgrenze (56, 58) verglichen werden, wobei das Anpassen des Reifendrucks (P) vorzugsweise in Abhängigkeit des Vergleichs der erfassten Positionsdaten oder der daraus abgeleiteten Positionsinformationen mit der zumindest einen Feldgrenze (56, 58) erfolgt.

3. Verfahren nach Anspruch 1 oder 2,
**dadurch gekennzeichnet, dass** die Positionserfassungseinheit (30) die Positionsdaten mittels eines Satellitennavigationssystems (60) erfasst.

4. Verfahren nach einem der vorstehenden Ansprüche,
**dadurch gekennzeichnet, dass** der eine Mehrzahl von Reifen aufweisende Reifenanordnung (24) ein Reifenpacker ist.

5. Verfahren nach einem der vorstehenden Ansprüche,
**dadurch gekennzeichnet, dass** die Reifenanordnung (24) einen oder mehrere Fahrwerksreifen (44a-44d) und/oder einen oder mehrere Packerreifen (38a-38f, 40a-40f, 42a, 42b) umfasst, wobei das Anpassen des Reifendrucks (P) an einem oder mehreren der Fahrwerksreifen (44a-44d) erfolgt.

6. Verfahren nach einem der vorstehenden Ansprüche,
**dadurch gekennzeichnet, dass** das Anpassen des Reifendrucks (P) des zumindest einen Reifens (36) selbsttätig unter Berücksichtigung der Positionsdaten oder automatisch nach manueller Bestätigung einer Bedieneraufforderung erfolgt.

7. Verfahren nach einem der vorstehenden Ansprüche,
**dadurch gekennzeichnet, dass** beim Anpassen des Reifendrucks (P) der Reifendruck (P) eines Reifens (36) oder mehrerer Reifen (36) der Reifenanordnung (24) mit einem ersten Reifendruck (P) und ein anderer Reifen (36) oder mehrere andere Reifen (36) mit einem zweiten Reifendruck (P) beaufschlagt werden.

8. Verfahren nach einem der vorstehenden Ansprüche,
**dadurch gekennzeichnet, dass** das Anpassen des Reifendrucks (P) bei Annährung der Anbaumaschine (16) an die zumindest eine Feldgrenze (56, 58) und/oder beim Überqueren der zumindest einen Feldgrenze (56, 58) durch die Anbaumaschine (16) erfolgt.

9. Verfahren nach einem der vorstehenden Ansprüche,
**dadurch gekennzeichnet, dass** das Anpassen des Reifendrucks (P) bei Annährung der Anbaumaschine (16) an eine sich im Verlauf der zumindest einen Feldgrenze (56, 58) befindenden Feldeinfahrt und/oder -ausfahrt (54) und/oder beim Überqueren einer sich im Verlauf der zumindest einen Feldgrenze (56, 58) befindenden Feldeinfahrt und/oder -ausfahrt (54) durch die Anbaumaschine (16) erfolgt.

10. Verfahren nach einem der vorstehenden Ansprüche,
**dadurch gekennzeichnet, dass** das Anpassen des Reifendrucks (P) infolge
- einer aktuellen Maschinenkonfiguration oder einer geplanten Änderung der Maschinenkonfiguration der Anbaumaschine (16), und/oder
- eines aktuellen Betriebsstatus (I-V) oder einer geplanten Änderung des Betriebsstatus (I-V) der Anbaumaschine (16)
erfolgt.

11. Verfahren nach einem der vorstehenden Ansprüche,
**dadurch gekennzeichnet, dass** das Anpassen des Reifendrucks (P) in Abhängigkeit
- der Bewegungsgeschwindigkeit der Anbaumaschine (16); und/oder
- der Bodeneigenschaften innerhalb und/oder im Nahbereich der zumindest einen Feldgrenze (56, 58); und/oder
- des Straßenzustands und/oder der Art einer zu der zumindest einen Feldgrenze (56, 58) führenden und/oder entlang der zumindest einen Feldgrenze (56, 58) verlaufenden Straße (S); und/oder
- des Füllstands eines Vorratsbehälters (18) der Anbaumaschine (16); und/oder
- der Wetterbedingungen innerhalb und/oder im Nahbereich der zumindest einen Feldgrenze (56, 58) und/oder auf einer zu der zumindest einen Feldgrenze (56, 58) führenden und/oder entlang der zumindest einen Feldgrenze (56, 58) verlaufenden Straße (S); und/oder
- der aktuellen und/oder einer erwarteten Bewegungsdynamik und/oder Lage der Anbaumaschine (16); und/oder
- der aktuellen und/oder einer erwarteten Fahrdynamik und/oder Fahrzeuglage des Zug- oder Trägerfahrzeugs (12); und/oder
- des Zustands der Reifen (36)
erfolgt.

12. Steuersystem zum Steuern des Reifendrucks (P) zumindest eines Reifens (36) einer eine Mehrzahl von Reifen aufweisenden Reifenanordnung (24), mit
- einer Positionserfassungseinheit (30), welche dazu eingerichtet ist, Positionsdaten zur Bestimmung der Position der Anbaumaschine (16) zu erfassen,
- einer Reifendrucksteuereinheit (32), welche dazu eingerichtet ist, den Reifendruck (P) des zumindest einen Reifens (36) der Reifenanordnung (24) in Abhängigkeit der erfassten Positionsdaten und zumindest einer Feldgrenze (56, 58) anzupassen, und
- einem Datenspeicher (34), auf welchem die zumindest eine Feldgrenze (56, 58) hinterlegt ist.

13. Steuersystem nach Anspruch 12,
**dadurch gekennzeichnet, dass** das Steuersystem dazu eingerichtet ist, das Verfahren nach einem oder mehreren der Ansprüche 1 bis 11 auszuführen.
